# EUROPEAN PATENT APPLICATION

(11) **EP 4 765 538 A1**
(43) Date of publication of application: **24.06.2026**
(21) Application number: 24222481.4
(22) Date of filing: 20.12.2024
(51) Int. Cl.: H02J 1/10, B60H 1/00, H02J 1/14, H02J 7/00, B60R 16/03, H02J 7/14

(54) **POWER NETWORK FOR A TRANSPORT CLIMATE CONTROL SYSTEM**

(71) Applicant: Thermo King LLC, Minneapolis, MN 55420 (US)
(72) Inventor: AUGENSTEIN, Eckardt, 45147 Essen (DE)
(74) Representative: Haseltine Lake Kempner LLP

(57) **Abstract**

There is disclosed a power network for a transport climate control system, comprising: a DC bus configured to provide power from a plurality of power sources to a load, including one or more autonomous power sources; one or more autonomous control modules, each associated with a respective one of the autonomous power sources; and a primary control module configured to determine a resource demand value for the power network by monitoring power delivery to the load. The resource demand value varies as a quantitative variable, and each autonomous control module receives the resource demand value and determines whether to cause power delivery from the respective autonomous power source to the DC bus based on the resource demand value and a corresponding resource availability function associated with the respective power source

## Description

### FIELD OF THE INVENTION

The present disclosure relates to a power network for a transport climate control system (TCCS), and in particular to controlling power delivery from a plurality power of power sources for the TCCS.

### BACKGROUND OF THE INVENTION

A transport climate control system (TCCS) can include, for example, a transport refrigeration system (TRS) and/or a heating, ventilation and air conditioning (HVAC) system. A TRS is generally used to control an environmental condition (e.g., temperature, humidity, air quality, and the like) within a cargo space of a transport unit (e.g., a truck, a container (such as a container on a flat car, an intermodal container, etc.), a box car, a semi-tractor, a bus, or other similar transport unit). The TRS can maintain environmental condition(s) of the cargo space to maintain cargo (e.g., produce, frozen foods, pharmaceuticals, etc.) In some embodiments, the transport unit can include a HVAC system to control a climate within a passenger space of the vehicle.

It is known to provide multiple power sources for a TCCS, and for a controller to selectively direct power from the various sources in particular conditions.

According to a first aspect, there is provided a power network for a transport climate control system, comprising:
a DC bus configured to provide power from a plurality of power sources to a load, including one or more autonomous power sources,
one or more autonomous control modules, each associated with a respective one of the autonomous power sources;
a primary control module configured to determine a resource demand value for the power network by monitoring power delivery to the load, wherein the resource demand value varies as a quantitative variable;
wherein each autonomous control module is configured to receive the resource demand value and determine whether to cause power delivery from the respective autonomous power source to the DC bus based on the resource demand value and a corresponding resource availability function associated with the respective power source.

For example, it may be that the resource demand value is indicative of a demand for additional (and/or alternative) power delivery to the DC bus, and each resource availability function is indicative of a resource availability (e.g. scarcity, economic cost, emissions cost). By evaluating the resource availability function or a criterion based on the resource demand value and the resource availability function, it can be determined whether the demand for power delivery is sufficient to justify providing power from the respective power source. For example, the resource demand value may be determined so that it is relatively high when there is a relatively high demand for additional or alternative power delivery (and relatively low when there is a relatively low demand), and the resource availability function may be relatively high when the respective resource is relatively scarce, or available at a relatively high cost (e.g., a fuel or energy cost, and/or equipment operation cost), or is associated with relatively high generation of emissions (and relatively low when the respective resource is relatively plentiful, available at relatively low cost, or available with relatively low generation of emissions). In such examples, each autonomous control module may be configured to cause power delivery from the respective autonomous power source to the DC bus when the resource demand value is greater than a threshold associated with the resource availability function (which threshold may be the resource availability function).

It may be that the primary control module is configured to determine the resource demand value based on a monitored deficit or excess of power delivery to the DC bus, relative to a power demand of the load.

It may be that the plurality of power sources comprises a battery power source. It may be that there is a deficit in power delivery to the DC bus when the battery power source discharges power to the DC bus; and that there is an excess of power delivery to the DC bus when the battery power source is charged by power delivery from the DC bus.

It may be that the primary control module is configured to vary the resource demand value through a range of resource demand values based on the monitored deficit or excess of power delivery to the DC bus. It may be that the primary control module is configured to vary the resource demand value towards one end of the range to promote an increase of power delivery from the autonomous power sources to reduce a monitored deficit. It may be that the primary control module is configured to vary the resource demand towards the opposing end of the range to promote a reduction of power delivery from the autonomous power sources to reduce a monitored excess.

The range of resource demand values may be a predetermined range of resource demand values. Varying the resource demand value can promote an increase of power delivery from the autonomous power sources, because the (independent) evaluation by the autonomous control modules of whether to deliver power is dependent on the resource demand value.

It may be that the primary control module is configured to vary the resource demand value based on one or more of:
a state of charge of the battery power source;
a discharge power supplied by the battery power source to the DC bus;
a charging power supplied to the battery power source from the DC bus;
a predicted power consumption of the load for a mission of the transport climate control system;
a comparison of a monitored power consumption of the load and a target power consumption of the load for the mission of the transport climate control system;
a predicted power consumption of the battery power source for a mission of the transport climate control system;
a comparison of a monitored power consumption of the battery power source and a target power consumption of the battery power source for the mission of the transport climate control system.

It may be that the primary control module is configured to vary the resource demand value by: comparing the state of charge of the battery source with a target state of charge; and varying the resource demand value to promote an increase in power delivery from the autonomous power sources when the state of charge of the battery is lower than the target state of charge; and varying the resource demand value to promote a reduction in power delivery from the autonomous power sources when the state of charge of the battery is higher than the target state of charge.

It may be that the primary control module is configured to vary the resource demand value by: varying the resource demand value to promote an increase in power delivery from the autonomous power sources when the discharge power is determined to be higher than a target discharge power; varying the resource demand value to promote a reduction in power delivery from the autonomous power sources when the charging power is determined to be higher than a target charging power.

It may be that at least one of the autonomous power sources is configured so that, when controlled to deliver power to the DC bus by the respective autonomous control module, the power is delivered at a delivery power determined based on power generation at the respective power source and independent of a power demand of the load.

It may be that each autonomous control module is configured to maintain power delivery from the respective autonomous power source to comply with one or more power delivery limits received from the primary control module. For example, the primary control module may specify a maximum current that may be delivered onto the DC bus (e.g. a total maximum current, an incremental additional current, or a current from the respective autonomous power source), and the autonomous control module may control power delivery from the respective autonomous power source to maintain the current at or below the respective limit. The limit may be a current limit, a voltage limit, or a power limit, for example.

It may be that for at least one of the autonomous power sources, the respective resource availability function corresponds to a resource cost for power delivery from the power source to the DC bus.

The resource availability function may be a constant function. The resource cost may correspond to a resource cost per unit of energy delivered from the power source to the DC bus (e.g. a resource cost per kWh).

It may be that the respective resource availability value is independent of a delivery power at which power is delivered from the power source to the DC bus (e.g., not varying dependent on the power at which power is delivered from the power source to the DC bus).

It may be that one of the autonomous power sources is configured to consume a fuel and the respective resource availability function corresponds to a resource cost for the fuel. It may be that one of the autonomous power sources is a power take-off device configured to convert mechanical power for movement of a vehicle associated with the transport climate control system to electrical power for delivery to the DC bus, wherein the respective resource availability function corresponds to a resource cost for the mechanical power. It may be that one of the autonomous power sources is configured to selectively transfer power from a utility power source to the DC bus, and the respective resource availability function corresponds to a resource cost and/or connection status for the transferred power.

It may be that one of the autonomous power sources is a power take-off device configured to convert mechanical power for movement of a vehicle associated with the transport climate control system, to electrical power for delivery to the DC bus. It may be that the respective autonomous control module is configured to cause the power take-off device to deliver power to the DC bus at a variable delivery power which varies through a range of non-zero delivery powers, for example based on an electrical power currently generated by the power take-off device, or as a function of one or more of: the resource demand value; the resource availability function and a parameter relating to a reserve mechanical power, as noted above).

It may be that at least one of the autonomous power sources is a fuel-consuming power source configured to consume a fuel. It may be that the power network comprises a mode control module configured to select between operation in a baseline mode and a low emissions mode; wherein the mode control module is configured so that moving from the baseline mode to the low emissions mode causes: an autonomous control module associated with a fuel-consuming power source to vary the respective resource availability function to promote a reduction of power delivery from the fuel-consuming power source; and/or the primary control module to vary the resource demand value to promote a reduction of power delivery from the autonomous power sources.

The mode control module may be separate from the primary control module and/or the autonomous control module associated with fuel-consuming power source, and may communicate with the primary control module and/or the autonomous control module respectively. The mode control module may be part of the autonomous control module associated with the fuel-consuming power source. The mode control module may be part of the primary control module.

It may be that the power network comprises a location determination module configured to monitor a location of the transport climate control system. It may be that the mode control module is configured to switch between operation in the baseline mode and the low emissions mode based on the monitored location of the transport climate control system.

For example, it may be desired to operate the transport climate control system with relatively lower emissions at particular locations (e.g. corresponding to specified low emissions zones, which may be a low emissions zone as specified by a local authority or based on other location-based data, such as data relating to population, traffic, speed limits, or air quality). The location determination module or the mode control module may determine (e.g. based on predetermined location data or by reference to an external data source) that the monitored location corresponds to operation in the low emissions mode.

Additionally or alternatively, the mode control module may be configured to switch between operation in the baseline mode and the low emissions mode based on receiving a command signal.

The power network may be configured so that a reduction of power delivery from the autonomous power sources, given a constant power demand of the load, results in an increase of power delivery from a battery power source.

It may be that the plurality of power sources comprises a solar power source configured to deliver electrical power from a solar array, and a solar control module configured to permit power delivery from the solar power source irrespective of the resource demand value.

It may be that for at least one of the autonomous power sources, the respective autonomous control module is removable from the power network independently of the primary control module.

It may be that for each of the autonomous power sources, the respective autonomous control modules are each removable from the power network independently of each other and of the primary control module.

It may be that for at least one of the autonomous power sources, the respective autonomous control module is configured to control power delivery from the autonomous power source only based on: (i) one or more parameters that exclusively relate to the autonomous power source, including the resource availability function; (ii) the resource demand value received from the primary control module; and (iii) any power delivery limit for power delivery to the DC bus.

It may be that no power delivery limit for power delivery to the DC bus is specified, or that a power delivery limit for power delivery to the DC bus is received by the autonomous control module, for example from the primary control module as discussed above.

It may be that the resource demand value is not a direct function indicative of an amount of power, and wherein each of the autonomous control modules is configured so that: a determination to cause power delivery is based on the resource demand value and the respective resource availability function; and a delivery power at which the power is to be delivered is determined independently of the resource demand value.

The skilled person will appreciate that except where mutually exclusive, a feature described in relation to any one of the above aspects may be applied mutatis to any other aspect. Furthermore, except where mutually exclusive any feature described herein may be applied to any aspect and/or combined with any other feature described herein.

### BRIEF DESCRIPTION OF DRAWINGS

References are made to the accompanying drawings that form a part of this disclosure and which illustrate, by way of example only, embodiments in which the systems and methods described in this specification can be practiced.
**Figure 1A** illustrates a side view of a truck with a front wall mounted vehicle powered transport refrigeration unit;
**Figure 1B** illustrates a schematic cross-sectional side view of a refrigerated transport unit with a multi-temp transport refrigeration system;
**Figure 2** schematically shows an example power network for a TCCS with a distributed controller configuration;
**Figure 3** schematically shows an example power network for a TCCS with a common controller configuration;
**Figure 4** is a flow diagram of a method of operating the power network;

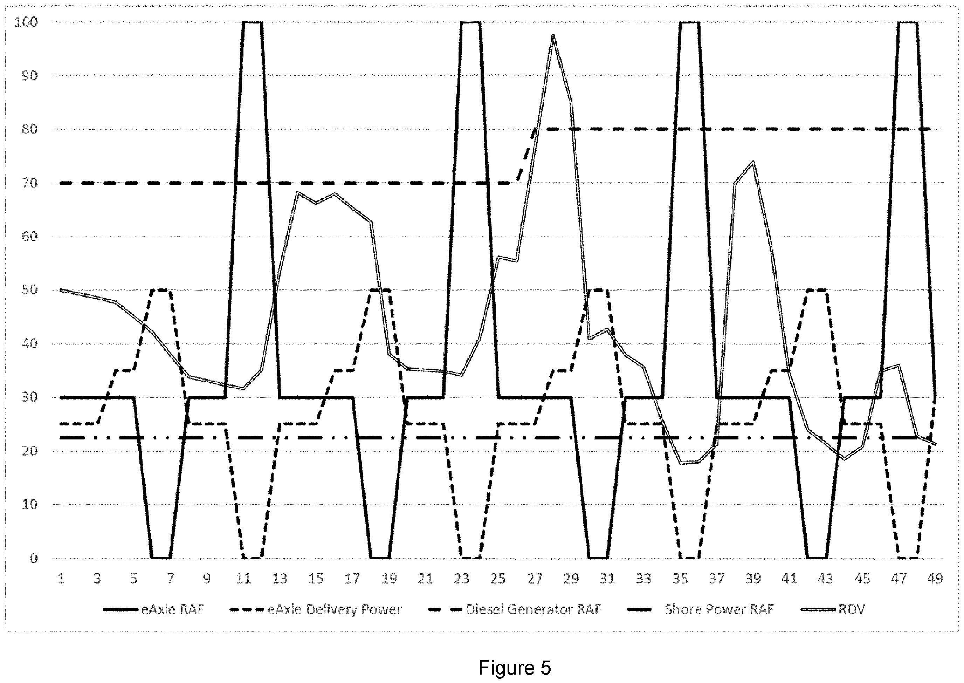

**Figure 5** is a plot of a resource demand value and resource availability functions for an example mission of a TCCS;

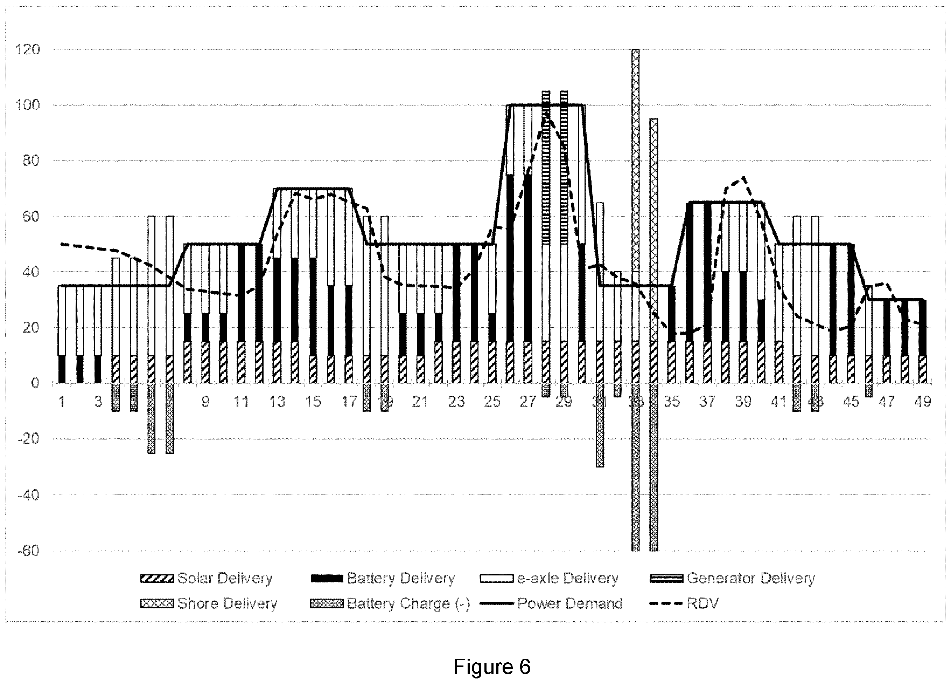

**Figure 6** is a plot of power delivery from power sources for the TCCS during the example mission;
**Figure 7** is a plot of a battery state of charge and a varying resource demand value during an example mission;
**Figure 8** is a dual plot of profiles of battery discharging and charging, and corresponding variation of a resource demand value; and
**Figure 9** is a flow diagram of a method of selecting between a baseline and a low emissions mode.

### DETAILED DESCRIPTION OF THE INVENTION

The examples described herein generally relate to controlling power delivery from multiple power sources in a power network for a transport climate control system (TCCS). The examples described herein can be provided in, for example, a TCCS such as a TRS or MTRS (Multi-Temp Transport Refrigeration System) for a transport unit (TU), an HVAC system for a vehicle, etc.

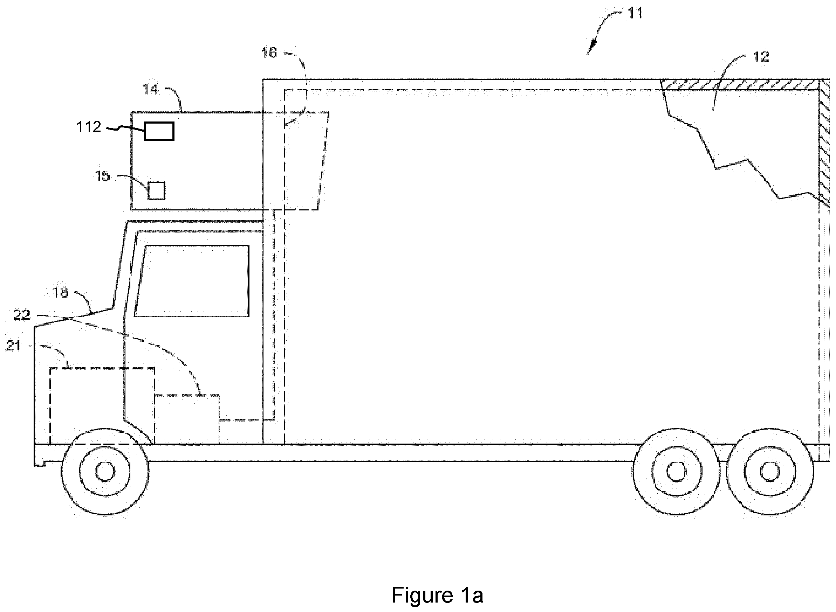

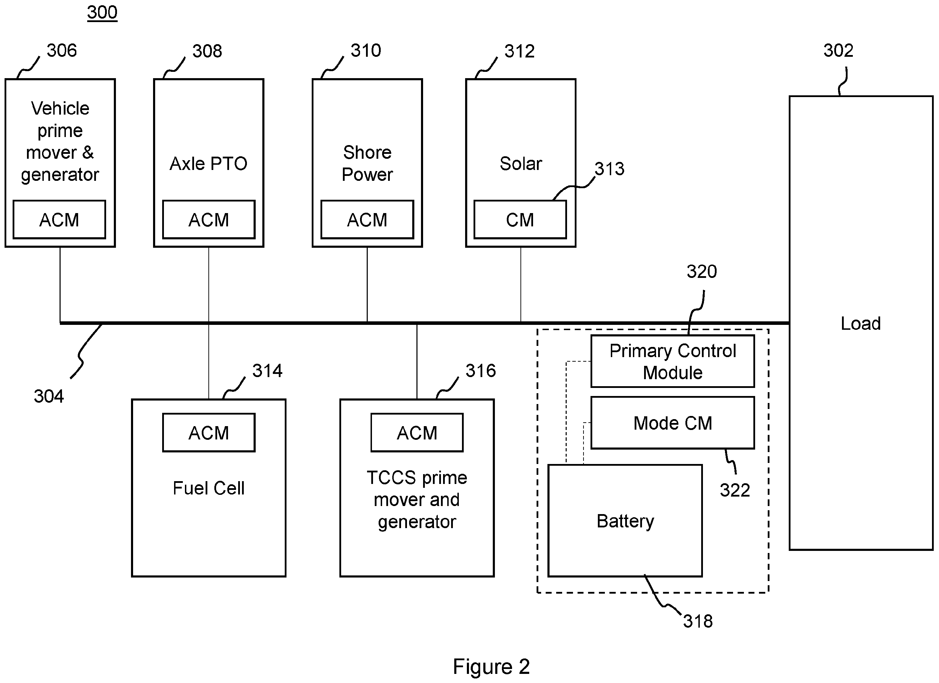

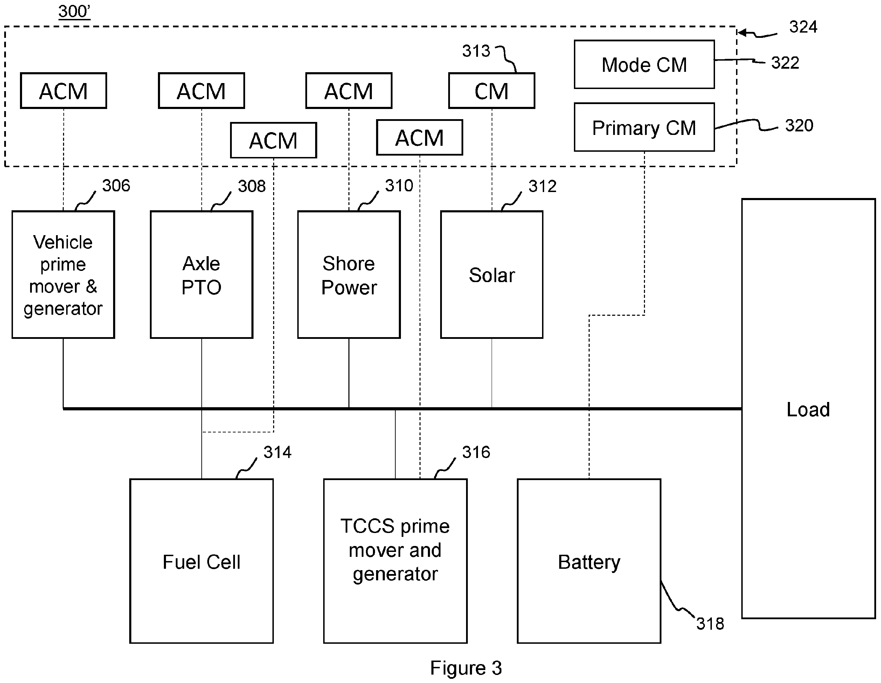

Figure 1A depicts a temperature-controlled straight truck 11 that includes a conditioned load space 12 for carrying cargo. A transport refrigeration system (TRS) 14 is mounted to a front wall 16 of the load space 12. The TRS 14 is controlled via a controller 15 to provide temperature control within the load space 12. The truck 11 further includes a vehicle power bay 18, which houses a prime mover 21, such as a combustion engine (e.g., diesel engine, etc.), that provides power to move the truck 11. The TRS 14 is powered by a plurality of power sources as will be described further with reference to Figures 2 and 3, and which may include power sources of the TRS and/or of the truck 11. Power sources of the truck include the prime mover which may operate in combination with generator 22 (e.g., an alternator) to provide power to the TRS 14. The truck 11 can be a hybrid vehicle that is powered by the prime mover 21 in combination with a battery power source or can be an electrically driven truck in which the prime mover 21 is replaced with an electric power source (e.g., a battery power source).

While Figure 1A illustrates a temperature-controlled straight truck 11, it will be appreciated that the embodiments described herein can also apply to any other type of transport unit including, but not limited to, a container (such as a container on a flat car, an intermodal container, etc.), a box car, or other similar transport unit.

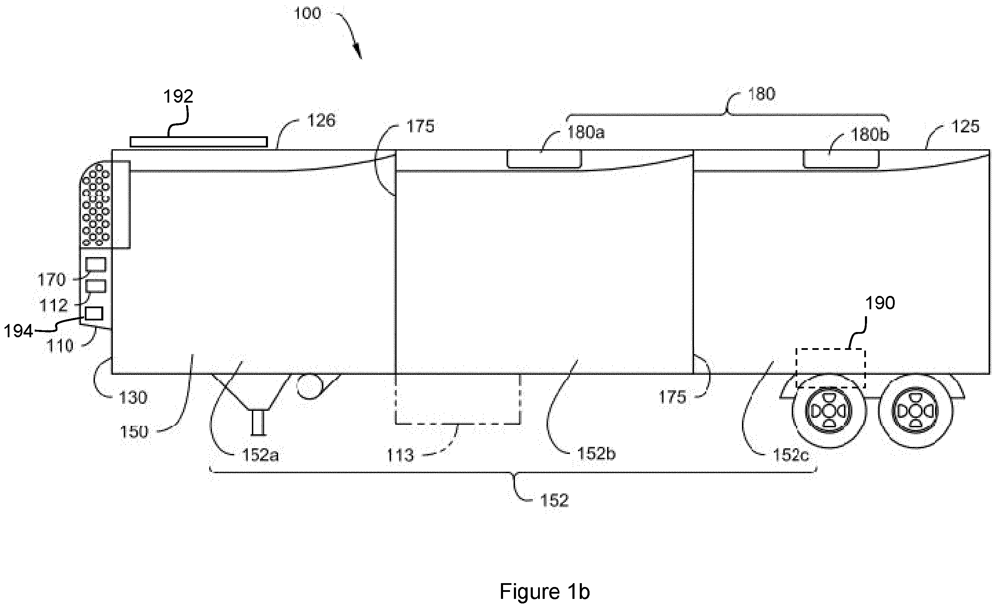

Figure 1B illustrates a MTRS 100 for a TU 125 that can be towed, for example, by a tractor vehicle (not shown). The MTRS 100 includes a TRS 110 that provides environmental control (e.g. temperature, humidity, air quality, etc.) within an internal space 150 of the TU 125, which as shown is divided into a plurality of zones 152a, 152b, 152c as separated by walls 175. Separate heat exchangers 180a, 180b may be provided for respective zones . The MTRS 100 includes a MTRS controller 170 and one or more sensors that are configured to measure one or more parameters (e.g., ambient temperature, compressor suction pressure, compressor discharge pressure, supply air temperature, return air temperature, humidity, etc.) of the MTRS 100 and communicate parameter data to the MTRS controller 170. The TRS 110 is disposed on a front wall 130 of the TU 125. In other embodiments, it will be appreciated that the TRS 110 can be disposed, for example, on a rooftop 126 or another wall of the TU 125.

The MTRS 100 may include an undermount unit 113. In some embodiments, the undermount unit 113 can be a TRS that can also provide environmental control (e.g. temperature, humidity, air quality, etc.) within the internal space 150 of the TU 125. The undermount unit 113 can work in combination with the TRS 110 to provide redundancy or can replace the TRS 110. Also, in some embodiments, the undermount unit 113 can be a power module that includes, for example, a generator that can provide power to the TRS 110.

The programmable MTRS Controller 170 may comprise a single integrated control unit or may comprise a distributed network of TRS control elements. The MTRS controller 170 is configured to control operation of the MTRS 100.

The TU 125 and/or the TRS 110 are provided with a plurality of power sources. In the example of Figure 1b, the TU 125 is provided with a power take-off device 190 and a solar power source 192 mounted to a roof 126. In this example, the power take-off device is an axle generator mounted to an axle of the TU 125 that is configured to rotate during movement of the TU 125, but which does not form part of a drivetrain of the associated vehicle (i.e. it is not on the direct mechanical path between a prime mover of the associated vehicle and driven wheels of the vehicle). The power-take off device is selectively operable to convert mechanical power of the rotating axle to electrical power. Other examples of power take-off devices may be coupled to a drivetrain of a vehicle associated with a TCCS. Figure 1B also shows the TRS 110 provided with a TCCS-mounted power source 194, examples of which include a fuel-cell or a TCCS-mounted prime mover and generator.

The TRS of Figure 1A and the MTRS 100 of Figure 1B are examples of transport climate control systems (TCCS) as envisaged in this disclosure. A TCCS, including the examples of Figures 1A and 1B, includes various electronic components having respective power demands. The TCCS may include a power module 112 (as shown in both Figures 1A and 1B) which receives power for providing to the various electrical components, as will be further described below. The TCCS or its power module therefore provides an electrical load having a power demand.

As illustrated in Figure 2, a TCCS according to the present disclosure (e.g. the TRS of Figure 1A or the MTRS 100 of Figure 1B) is represented as a load 302 provided with electrical power via a power network 300, the power network comprising a DC bus 304 configured to provide power from a plurality of power sources to the load 302 (e.g. the TCCS or electronic components thereof).

The power network 300 may be partially or wholly provided within the TCCS, or may extend beyond the structure of the TCCS (e.g. being provided on a transport unit (TU) or a vehicle associated with a transport unit (TU) to which the TCCS is provided, such as a tractor for a transport unit. Each power source may be coupled to the DC bus via a suitable converter (e.g. a DC-DC converter for DC power sources, and an AC-DC converter for AC power sources), configured to regulated the current at which power is delivered to the DC bus. When a battery power source is provided, the voltage on the DC bus may be determined by the battery. In this case, the power sources may be configured to maintain their power delivery within determined voltage limits. A suitable voltage range for operation of the DC bus may be 200V-100V, for example 300V-800V (e.g. 300V-500V, or 600V-800V). In some examples, there may be no battery power source, and in such examples the power sources may be configured to regulate the current delivered such that the DC bus voltage is stabilized at a determined setpoint. The DC bus voltage stabilization may be supported by a capacitor or supercapacitor.

Any suitable combination of power sources may be provided. For example, as shown in Figure 2 the power sources can include two or more of a vehicle drive prime mover and generator 306, a power take-off device 308 (e.g. an axle-mounted generator), a utility (shore) power source 310, a solar power source 312 (e.g. a solar panel or solar panel array), a fuel cell 314, a non-drive prime mover and generator 316 (e.g. a prime mover which is not for driving movement of a vehicle), a battery power source 306. A prime mover can be a combustion engine (e.g. a diesel engine) or a microturbine engine and can operate as a two speed prime mover, a variable speed prime mover, etc. A prime mover can be provided with a generator machine (e.g., a belt-driven alternator, a direct drive generator, etc.), etc. For example, in some embodiments, mechanical energy generated by a diesel engine is converted into electrical energy via a generator machine. The electrical energy generated via the belt driven alternator is then converted into DC electrical power via, for example, a bidirectional voltage converter.

As noted above, a TCCS may comprise a power module (as shown in both Figures 1A and 1B at 112), and the power module may serve as the load 302 which receives power from the DC bus for use in the TCCS. The power module can provide power to, for example, a controller for the TCCS (15, 170), a compressor (not shown), a plurality of DC (Direct Current) components (not shown), a power management unit, etc. The DC components can be accessories or components of the TCCS that require DC power to operate. Examples of the DC components can include, for example, DC fan motor(s) for a condenser fan or an evaporator blower (e.g., an Electrically Commutated Motor (ECM), a Brushless DC Motor (BLDC), etc.), a fuel pump, a drain tube heater, solenoid valves (e.g., controller pulsed control valves), expansion valves, electrical heaters (e.g., for evaporator defrost or cabin heating) etc. The power management unit may include any DC/AC converters and/or DC/DC converts as may be required to provide power to the components of the TCCS.

The power sources shown in Figure 2 are schematically illustrated in two sets: a first set (above the DC bus 304 as schematically illustrated) including the vehicle prime mover and generator 306, the axle-mounted power take-off device 308, the shore power source 310, and the solar power source 312; and a second set (below the DC bus 304 as schematically illustrated) including the fuel cell 314, the TCCS-mounted prime mover and generator 316, and the battery 318. The first set may be considered to be power sources mounted remote from the TCCS (e.g., on the associated transport unit, or the associated vehicle), whereas the second set may be considered to be TCCS-mounted power sources. In other examples, there may be fewer power sources (e.g. two or more power sources), and various power sources in the second set may alternatively be provided as remote power sources, and various power sources of the first set may alternative be provided as TCCS-mounted power sources.

While the various power sources described above are well known and understood, for completeness the following remarks clarify the nature of selected power sources. In particular, the shore power source 310 is intended to refer to connection equipment of the power network configured to convey power from a remote shore (utility) power outlet to the DC bus, and not to the shore (utility) power outlet itself (which may be part of an installed power grid). Accordingly, the shore power source 310 of the power network is configured to deliver power to the DC bus only when coupled to the shore (utility) outlet, and may include connection and conversion equipment (e.g. an AC/DC converter).

Similarly, various power sources may be configured to generate power by consuming a fuel, for example the vehicle prime mover and generator 306, the fuel cell power source 314, the TCCS prime mover and generator 316. The power take-off device may operate to increase fuel consumption in some operating modes (for example when engaged such that additional mechanical power is required from the vehicle prime mover to continue moving the vehicle), but may not lead to fuel consumption in other operating modes (for example when engaged during regenerative braking).

Power delivery to the DC bus from the plurality of power sources is controlled based on a variable resource demand value determined by a primary control module 320 of the power network, and communicated to autonomous control modules associated with a plurality of autonomous power sources. The resource demand value varies as a quantitative variable (e.g., through a range, as opposed to varying between discrete values indicative of particular power settings or specific control functionality). Power delivery decisions are effectively delegated to the autonomous control modules, indirectly influenced by variation of the resource demand value as a quantitative variable, such that the primary control module does not directly determine which of the autonomous power sources provides power. This operating principle enables decentralized control of the plurality of power sources, which operate independently to make individual power delivery decisions based on resource availability (as will be discussed below). Accordingly, instead of requiring a complex set of central control laws based on monitoring each power source and respective resource availability, the primary control module can be more simply configured to vary the resource demand value to promote an increase or a reduction in power delivery from the autonomous power sources. This operating principle means that the primary control module is generally inter-operable with a wide range of different power sources ("power source agnostic"), without requiring the primary control module to be specifically configured to inter-operate with such different power sources.

The expression "promote" is used since this reflects that when the primary control module varies the resource demand value, the variation does not directly translate to a predetermined control outcome that one of the autonomous power sources will respond by commencing power delivery or increasing power delivery by a commensurate amount. Instead, each autonomous control module is configured to determine whether to deliver power (and at what delivery power) independently, based on the resource demand value and a corresponding resource availability function determined by the autonomous control module. As will be described further below, the resource availability function may correspond to the availability of a resource for the respective power source. It will be appreciated that, while independently operating, each of the autonomous control modules would be configured to respond appropriately to the variation of the resource demand value. For example, if the primary control module is configured to increase the resource demand value to promote power delivery from the autonomous power sources, the autonomous power sources will correspondingly be configured to respond to an increase in the resource demand value in a way which increases a likelihood of delivering power. For example, when the primary control module is configured to increase the resource demand value to reflect an increasing demand for power, an autonomous control module may be configured to cause power delivery from the respective autonomous power source when the resource demand value exceeds a threshold defined or derived from the resource availability function. The resource demand value may be considered to be analogous to a market price for power delivery, centrally varied to promote an increase or decrease in power delivery from autonomous control modules, each making independent evaluations of whether to deliver power based on the resource demand value and a respective resource availability function.

In the example shown in Figure 2, the autonomous power sources include the vehicle prime mover and generator 306, the axle power take-off device 308, the shore power source 310, the fuel cell power source 314, and the TCCS-mounted prime mover and generator 316. In contrast, the battery 318 and solar power source 312 are not autonomous power sources as described herein. The battery 318 is controlled by the primary control module 320 to accommodate an excess or deficient of power deliver to the DC bus relative to a power demand of the load, and a controller 313 for the solar power source is configured to deliver power without reference to the resource demand value (e.g., whenever power is generated at the solar power source for delivery).

While the primary control module and autonomous control modules act independently from a functional perspective, they may be installed together or separately. In the example power network of Figure 2, the various autonomous control modules are each provided separately (from each other and from the primary control module) and in association with their various power sources. This may be described as a distributed controller configuration. This may permit independent removal of an autonomous power source and associated autonomous control module (i.e., without requiring removal of other autonomous power sources or the primary control module), with corresponding advantages for interoperability and interchangeability of power sources for a power network. Alternatively, some or all of the autonomous power sources may be co-located with each other and/or with the primary control module 320, as shown in Figure 3. The example power network 300' of Figure 3 corresponds to the example power network 300 of Figure 2, but differs in that the autonomous control modules for the autonomous power sources 306, 308, 310, 314, 316 are provided together on a common controller or control assembly 324, along with the primary control module 320, a control module 313 for the solar power source, and a mode control module 322 (to be described below). As such, the control functionally for the associated power sources and the central control of the primary control module is provided on a common physical component. This may lead to corresponding advantages relating to reduced component count and complexity, but without independent removability of the respective control modules. The respective control modules may be provided as software or firmware that can be selectively added and removed from the common controller. Although Figure 3 shows an example in which all of the autonomous control modules, the primary control module and the mode control module are co-located on a common controller or control assembly, it is envisaged that in variant examples a subset of such modules may be co-located on a common controller. This may be referred to as a common controller configuration. Even when provided separately, the autonomous control modules need not be located at remote locations associated with the physical locations of the respective power sources (e.g. proximate the axle-mounted generator, or proximate a solar panel). For example, the autonomous control modules may be separately provided and independently removable in a common location (e.g. with a common power source), for example proximate a location where each of the power sources couple to the DC bus.

The primary control module may communicate the resource demand value to the autonomous control modules in any suitable way, for example over a wired or wireless link, or using a bespoke or standard communications protocol (e.g. a CAN bus protocol or similar).

The primary control module may also perform auxiliary communication with the autonomous control modules, unrelated to causing (e.g., promoting) power delivery from the autonomous power sources. For example, the primary control module and the autonomous control modules may communicate to establish a wired or wireless communication protocol (e.g. handshake or heartbeat procedures). Auxiliary communication may include communicating a power delivery limit from the primary control module, to prevent power delivery from an autonomous power source beyond a threshold that can be accommodated by the DC bus, load 302 and/or the battery 318. The power delivery limit may be communicated as a maximum current and/or maximum voltage (or a maximum power).

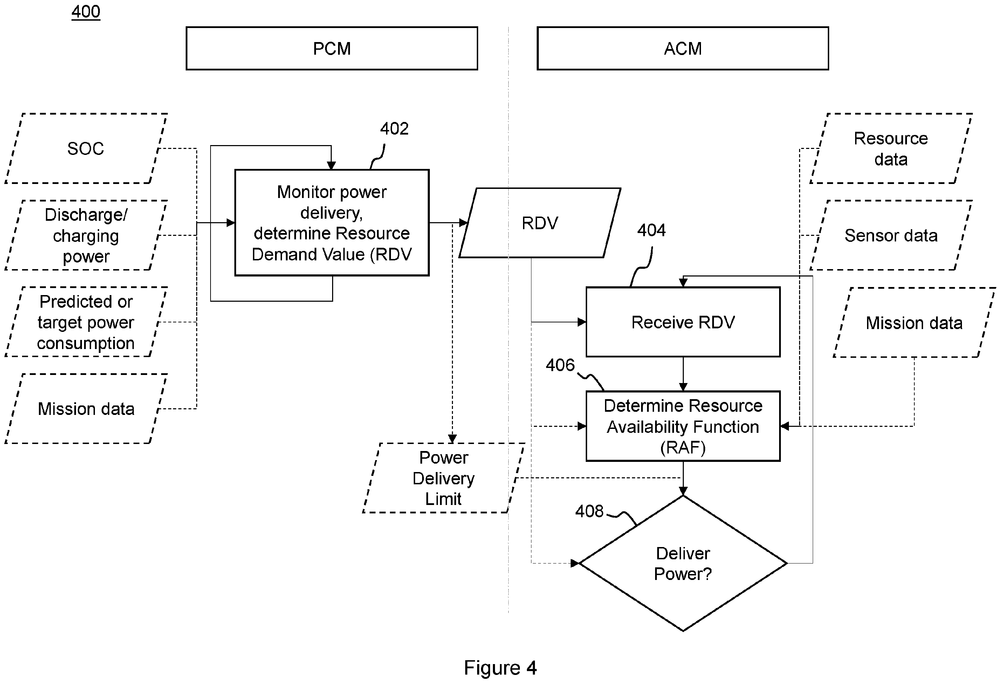

Figure 4 is a flow diagram of a method 400 of operating a power network, and will be described by way of example with reference to the example power network 300 of Figure 2 but is applicable to any power network as envisaged in the present disclosure.

Figure 4 separately indicates actions conducted by the primary control module 320 (PCM) and an autonomous control module (ACM), with respective actions in columns separated by a dash-dot line.

In block 402, the primary control module monitors power delivery to the DC bus and determines the Resource Demand Value (RDV) accordingly. The RDV is communicated to the autonomous control modules (as illustrated by data trapezoid "RDV").

The present disclosure envisages that the primary control module 320 may determine the RDV so that it varies responsive to various stimuli or monitored trends, which are generally indicative of a need for less or more power delivery from the autonomous power sources. In general, the load of the power network is met by the combination of power delivered from the power sources. If provided, the solar power source delivers any power that is generated. A deficit or excess in power provided by the autonomous power sources and any solar power source, relative to a power demand of the load, may be accommodated by the battery. When there is deficit in power, the battery may discharge power to the load to meet the remaining demand. When there is an excess in power delivery to the DC bus, the battery may be charged at a charging power corresponding to the excess. The energy stored by the battery is finite, and so the primary control module may be configured to control the resource demand value to regulate the usage of the battery, for example by promoting an increase of power delivery from the autonomous power sources when battery usage is generally high, and promoting a reduction of power delivery from the autonomous power sources when battery usage is generally low.

The primary control module may be configured to determine the resource demand value based on a monitored deficit or excess of power delivery to the DC bus (e.g. by the power sources excluding the battery), relative to a power demand of the load. For example, the primary control module may be configured to monitor for an excess of power delivery by determining whether the battery is being charged (and optionally at what charging power - i.e. a rate of power supply to the battery from the DC bus), and to monitor for a deficit by determining whether the battery is discharging (and optionally at what discharge power - i.e. a rate at which power is supplied to the DC bus from the battery). Additionally or alternatively, the load may be configured to monitor for an excess and/or deficit of power delivery, which may be monitored independently by the load or derived from monitoring by the power network (e.g., by the primary control module). When the load is configured to monitor for an excess and/or deficit of power delivery, the load may be configured to communicate the monitored excess and/or deficit to the primary control module. For example, the load may be configured to monitor the voltage on the DC bus. A drop of the voltage (e.g., below a threshold) may indicate a deficit of power delivery. The load may be configured to respond to a monitored deficit of power delivery by derating one or more power consumers of the load (e.g., controlling one or more power consumers of the load to consume less power). Such derating may mask a deficit in power delivery that would arise if the load did not perform such derating. Accordingly, the load may be configured to communicate a parameter relating to the amount of derating to the primary control module, such that the resource demand value may be determined based on a current monitoring of a monitored deficit or excess in conjunction with the amount of derating.

The primary control module may be configured to set the resource demand value as a function of the monitored deficit or excess, for example to increase the resource demand value from a baseline in proportion to the magnitude of the monitored deficit to promote an increase of power delivery from the autonomous power sources, and to decrease the resource demand value from a baseline in proportion to the magnitude of the monitored excess to promote a reduction of power delivery from the autonomous power sources. This may be referred to as a first mode of varying the RDV.

The primary control module may be configured to set the resource demand value based on a state of charge of the battery, for example to increase the resource demand value from a baseline when the state of charge is below a target SOC (state of charge) to promote an increase of power delivery from the autonomous power sources, and to decrease the resource demand value from a baseline when the state of charge is above a target SOC to promote a reduction of power delivery from the autonomous power sources. The magnitude of the increase or decrease may be a function of a difference between the monitored state of charge and the target state of charge. The target state of charge may be constant, or may vary. For example, the primary control module may be configured to vary the target state of charge during a mission for the TCCS. Such a variation may be on the basis that a reserve of battery power is more desirable towards a start of a mission for the TCCS than at the end, and it may be preferable for certain missions to use battery power if available to avoid fuel consumption associated with one or more autonomous power sources. The primary control module may be configured to determine (e.g. receive from a remote source, user input, or otherwise be programmed with) a varying profile of a target state of charge for the battery. Only by way of example, the profile of the target state of charge may be defined to progressively reduce from a high target to a lower target, or may vary non-uniformly, for example to promote use of battery power during selected phases of a mission for the TCCS (e.g. during transit through a predetermined low emissions zone, for example in a built-up area such as a town or city), and to promote charging (i.e. increasing the SOC of the battery) in anticipation of such phases.

The target state of charge may be determined based on one or more parameters relating to a mission for the transport climate control system, for example based on determining a predicted load demand for the mission (which may be a load demand distribution varying over time) based on parameters for the mission (e.g. a planned route, forecast weather conditions, forecast traffic conditions, historical data relating to previously instances of the mission or similar missions) and/or based on predicted power delivery from the plurality of power sources.

The target state of charge may be variable based on one or more parameters relating to a mission for the transport climate control system, such as a time (e.g. a current time, or a time remaining within a current mission, such as 30% of the mission time, or 100% of the mission time). For example, it may be that the target state of charge is initially relatively high at the start of the mission, but is lower towards an end of the mission, reflecting that there is less need to reserve power stored in the battery towards the end of the mission, such that battery power can be used in preference to other power sources.

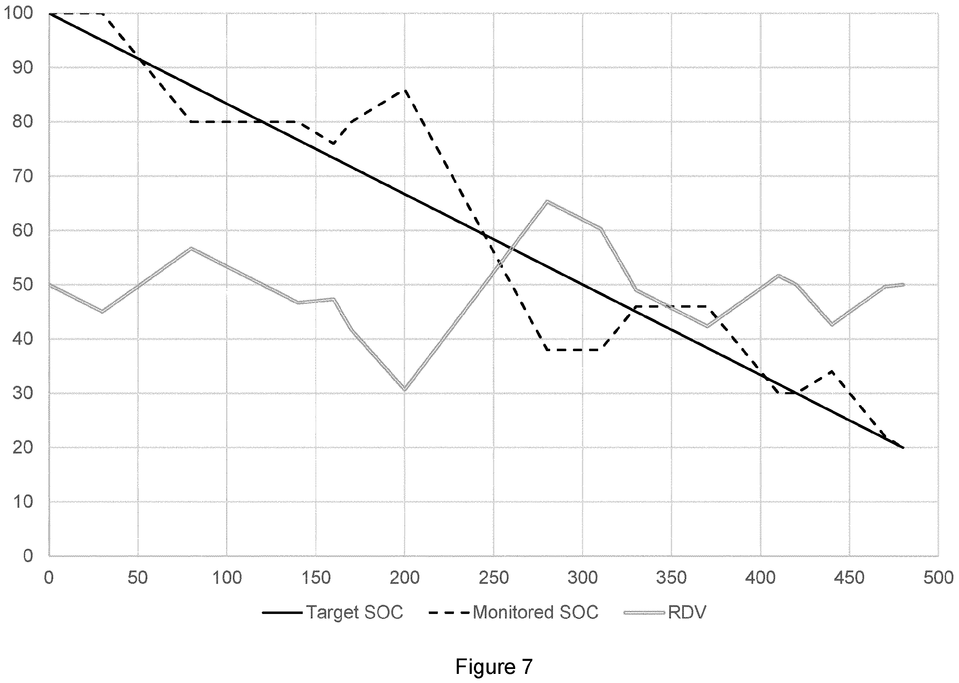

Varying the RDV based on the SOC of the battery may be referred to as a second mode of varying the RDV, and is illustrated with respect to a representative example in Figure 7 (discussed below). The battery may be provided with a sensor for monitoring the state of charge, for example based on cell voltage and/or historic charge and discharge of the battery.

The primary control module may be configured to vary the resource demand value based on the discharge power supplied by the battery power source to the DC bus or based on the charging power supplied to the battery power source from the DC bus. The expression "discharge power" relates to the power discharged from the battery (i.e., the rate of electrical energy delivery per unit time, for example in units of kW). The expression "charging power" relates to the power at which the battery is charged (i.e. the rate of electrical energy delivery per unit time, for example in units of kW). The discharge power may be evaluated by monitoring one or both of an electrical current discharged from the battery and a corresponding voltage. Similarly, the charging power supplied to the battery source may be evaluated by monitoring one or both of an electrical current supplied to the battery and a corresponding voltage.

For example, the primary control module may be configured to vary the resource demand value to promote an increase in power delivery from the autonomous power sources when the discharge power is determined to be higher than a target discharge power, and to vary the resource demand value to promote a reduction in power delivery from the autonomous power sources when the charging power is determined to be higher than a target charging power.

The target discharge power may be a predetermined or variable target discharge power. The target discharge power may itself be determined based on a state of charge of the battery and/or a parameter relating to a mission for the transport climate control system, as discussed below. The controller may be configured to determine the discharge power as an average (e.g. a rolling average for a time period preceding a current time) for comparison with the target discharge power. Accordingly peaks in discharge power may not immediately lead to a variation in the resource demand value, but a sustained increase in discharge power may lead to such a variation.

Similarly, the target charging power may be a predetermined or variable target charging power. The target charging power may itself be determined based on a state of charge of the battery and/or a parameter relating to a mission for the transport climate control system, as discussed above.

It may be that the controller determines the charging power as an average (e.g. a rolling average for a time period preceding a current time) for comparison with the target charging power. Accordingly peaks in charging power may not immediately lead to a variation in the resource demand value, but a sustained increase in charging power may lead to such a variation.

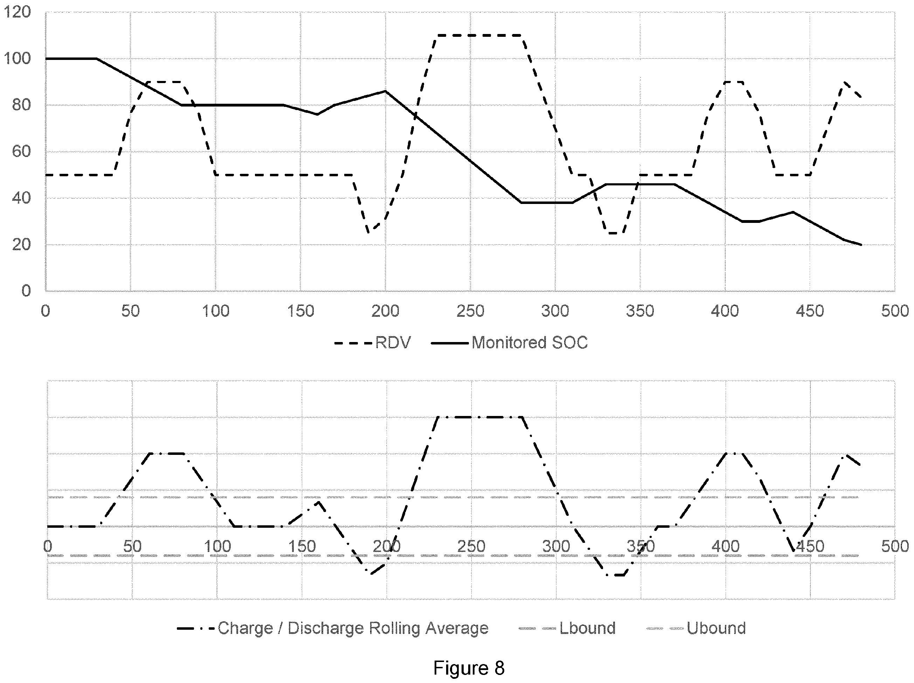

Varying the resource power based on the determined discharge power or charging power may be referred to as a third mode of varying the RDV, and is illustrated with respect to a representative example in Figure 8, discussed below.

Further, the primary control module may be configured to vary the resource demand value based on a predicted power consumption of the battery power source for a mission of the transport climate control system, or based on a comparison of a monitored power consumption of the battery power source and a target power consumption of the battery power source for the mission of the transport climate control system.

The expression "predicted power consumption" relates to the electrical energy (e.g. in units of kWh) predicted to be discharged by the battery power source for a respective mission - e.g., a current or planned mission of the transport climate control system, such as a cargo-transporting journey from a depot to a destination. The predicted power consumption may be a net consumption, such that predicted charging offsets predicted discharge. The predicted power consumption may be predetermined and fixed for a respective mission. The predicted power consumption may be predetermined or determined (e.g. based on parameters relating to the mission such as a route, forecast weather conditions, forecast traffic conditions, historical data relating to previously instances of the mission or similar missions). The predicted power consumption may be varied (e.g. re-determined) during a respective mission, for example based on one or more of: monitored use of the battery power source (e.g. charging and discharging), the resource demand value (e.g. a parameter relating to the resource demand value during the mission, for example an average of the resource demand value so far during the mission), and updated parameters relating to the mission (e.g. route, forecast weather conditions, forecast traffic conditions, historical data relating to previous instances of the mission or similar missions).

The expression "monitored power consumption" relates to the electrical energy discharged by the battery power source so far during a respective mission. The monitored power consumption may be a net consumption, such that charging offsets discharge. The monitored power consumption may be determined by monitoring one or both of (i) an electrical current discharged from or supplied to the battery and (ii) a corresponding voltage.

The expression "target power consumption" relates to a target electrical energy discharged by the battery power source during a respective mission. The target power consumption may be a profile of power consumption over the respective mission. The target power consumption may be a net consumption, such that charging offsets discharge. The target power consumption may be a predicted power consumption as defined herein, for example a predicted power consumption determined before or at the start of the mission.

A comparison of the monitored power consumption and the target power consumption may indicate that more or less electrical energy has been consumed from the battery than was targeted, and the controller may be configured to vary the resource demand value accordingly to promote an increase or a reduction in power delivery from the autonomous power sources. Varying the resource demand value based on a predicted, monitored and/or targeted power consumption may be referred to as a fourth mode of varying the RDV.

Further, the primary control module may be configured to set the resource demand value as a function of a monitored power demand (e.g., which may correspond to a monitored power consumption) of the load. For example, the primary control module may be configured to increase the resource demand value when the monitored power demand of the load is relatively high (and thereby promote an increase in power delivery from the autonomous power sources), and to reduce the resource demand value when the monitored power demand of the load is relatively low (and thereby promote a reduction in power delivery from the autonomous power sources). With suitable configuration of the respective autonomous control sources, such a form of control may avoid swings in charging and discharging behaviour that may arise from monitoring a deficit or difference between a monitored value (e.g. of power demand) and a target. Varying the resource demand value based on a monitored power demand (e.g., which may correspond to or be a monitored power consumption) may be referred to as a fifth mode of varying the RDV.

The primary control module may be configured to vary the resource demand value based on a variety of different factors in order to manage battery use. For example, the primary control module may be configured to implement one or a combination of the five modes of varying the RDV as discussed above.

While the above examples refer to an increase or decrease of the resource demand value having particular effects on promoting an increase or reduction of the power delivery from the autonomous power sources, it will be appreciated that in variant examples a relatively high resource demand value may indicate a relatively low demand for power, and so may be used by the power network (e.g. by the primary control module and the autonomous control modules acting together) to promote a reduction in power delivery from the autonomous control modules, and vice versa. Accordingly, an "increase" of the resource demand value in any of the above examples (or elsewhere herein) may otherwise be defined as varying the resource demand value to promote an increase in power delivery from the autonomous control modules, and a "decrease" of the resource demand value in any of the above examples (or elsewhere herein) may otherwise be defined as varying the resource demand value to promote a reduction in power delivery from the autonomous control modules.

Returning to Figure 4 and as noted previously, the primary control module may also determine and communicate one or more power delivery limits (as illustrated).

The primary control module is configured to repeatedly determine and communicate the resource demand value, for example at regular intervals, such as at intervals of 0.1 seconds or less, 0.5 seconds or less, 1 second or less, 5 seconds or less, or 10 seconds or less.

Blocks 404, 406, 408 are described with respect to an example autonomous control module, but are considered to be representative of the method as applied in any of the plurality of autonomous control modules. Merely by way of example, the autonomous control module is the axle-mounted power take-off device.

In block 404, the autonomous control module receives the resource demand value as communicated from the primary control module.

In block 406, the autonomous control module determines a resource availability function (RAF) for the respective autonomous power source. As noted elsewhere herein, the resource availability function is indicative of a resource availability (e.g., scarcity, economic cost, emissions cost). By evaluating the resource availability function or a criterion based on the resource demand value and the resource availability function, it can be determined whether the demand for power delivery is sufficient to justify providing power from the respective power source. As graphically illustrated in Figure 4, the resource availability function may be evaluated with respect to various data sources, examples of which include resource data, sensor data and mission data (of which more specific examples will be further described below).

In block 408, the autonomous control module determines whether to deliver power based on the outcome of block 406, and controls the respective autonomous power source accordingly. The autonomous control module is configured to repeatedly perform the steps of blocks 404, 406, 408 as described above, for example at intervals of 1 second or less, 5 seconds or less, or 10 seconds or less.

One or more autonomous control modules may be configured to compare the resource demand value with the resource availability value for the respective autonomous power source, and to cause power delivery from the respective power source when the resource demand value is greater than or equal to the respective resource availability function, and to prevent power delivery from the respective power source when the resource demand value is less than the respective resource availability function.

The resource availability function may be a constant function. For example, in a simple implementation for a fuel-consuming autonomous power source, the resource availability function may be a constant corresponding to the resource cost for the fuel. In other examples, the resource availability function may be variable, for example varying based on a parameter indicative of an availability of power from the respective power source, and/or a function of the resource demand value, as will be described below.

Examples of fuel-consuming autonomous power sources include the vehicle mounted prime mover and generator 306, the TCCS-mounted prime mover and generator 316, the fuel cell 314. The resource availability function for fuel-consuming power sources may correspond to (e.g. be proportional to or equal to) a resource cost for the respective fuel, for example a fuel cost per unit power. This may be an approximate predetermined constant, or dynamically determined by reference to information received at the respective controller from an external source.

The resource availability function may be variable, including for a fuel-consuming autonomous power source. For example, the resource availability function may vary based on similar parameters as described for the resource demand variable above, such as an amount of stored fuel, mission data relating to a mission for the TCCS. For example, the resource availability function may vary to indicate a greater resource availability when the amount of stored fuel for a first autonomous power source is relatively high (and/or when the vehicle is relatively close to a re-supply station for the respective fuel), and a lower resource availability when the amount of stored fuel is relatively low. This may promote, in the wider system, power delivery from other autonomous power sources in preference to the first autonomous power source when the resource availability function is indicative of a relatively low resource availability (which may correspond to a relatively high value for the resource availability function, corresponding to a relatively high resource cost), and promote power delivery from the first autonomous power source in preference to power delivery from other autonomous power sources when the resource availability function is indicative of a relatively high resource availability (which may correspond to a relatively low value for the resource availability function, corresponding to a low resource cost). As described above with respect to variation of the resource demand value, the resource availability function may vary based on one or more parameters relating to the mission of the TCCS, and may also vary based on a priority for the mission (e.g. a low emissions priority, as will be described below with reference to Figure 11).

A shore power source is an example power source for which the resource availability function may be defined to reflect the resource cost of the shore power (e.g. an economic cost for receiving power from a shore power connection), and/or an availability of the respective power source - for example whether or not the TCCS is coupled to a shore power connection to actually receive power. The autonomous control module (for the shore power source) may be configured to define the resource availability function independently of the connection status, and separately determine the connection status in order to determine whether to deliver power. Otherwise, the resource availability function may be defined to have an output that is indicative of the resource cost when the connection status is positive, and to have an output indicative of non-availability of power when the connection status is negative.

One or more autonomous control modules may define the resource availability function as a function of the resource demand variable, such that the output of the resource availability function varies depending on the resource demand variable and one or more parameters relating to the availability of power at the respective power source. The output of the resource availability function may indicate a delivery power at which power is to be supplied from the respective autonomous power source. In an example, the resource availability function may be defined so that the output is zero when the resource demand value is in a first range, and a variable non-zero value when the resource demand value is in a second range. This may be referred to as a variable delivery power resource availability function.

A power take-off device is configured to convert mechanical power for movement of a vehicle associated with the transport climate control system to electrical power for delivery to the DC bus. An autonomous control module for a power take-off device may be configured so that the respective resource availability function corresponds to a resource cost for the mechanical power (e.g., which may be zero to indicate no resource cost, for example when the power take-off device is operated to cause braking of the vehicle (i.e., regenerative braking).

The mechanical power may be derived from a prime mover such as the vehicle-mounted prime mover for driving movement of the transport climate control system (e.g., a vehicle drive of a tractor configured to tow a trailer provided with the transport climate control system, or a vehicle drive of a vehicle which comprises the transport climate control system). The power take-off device may be coupled to a drivetrain of the vehicle to receive the mechanical power, or may be coupled to a passively motive component such as a non-driven axle (e.g. of the vehicle or a towed trailer) that is caused to rotate when the vehicle (and transport climate control system) moves (e.g. when driven to move by the prime mover, or when continuing to move under inertia of the vehicle - e.g., during braking or regenerative braking).

When the autonomous power source comprises the power take-off device, the respective autonomous control module may be configured to determine the resource availability function based on a resource cost for the mechanical power, which may be a resource cost for operating the prime mover when the prime mover is driving movement of the transport climate control system, and which may be zero (e.g. to indicate no resource cost) when the power take-off device is operated to cause braking of the vehicle (i.e., regenerative braking). As is known in the art, regenerative braking may be initiated responsive to a braking signal received at a regenerative braking unit (e.g., a power take-off device or axle generator ("eAxle" as discussed herein). Accordingly, there is a distinction between operation responsive to a regenerative braking command (which effectively corresponds to electrical power generation at no immediate resource cost) as compared with operation to convert mechanical power derived from operation of a prime mover as described above, which is associated with a resource cost for operating the prime mover. A control module for the power take-off device may vary the resource availability function for the power take-off device accordingly, for example from 0 (corresponding to regenerative braking), to an amount corresponding to a fuel cost for operation of the prime mover, to a high value (e.g., 100) corresponding to non-availability of generated power (e.g., when the axle is not turning).

Additionally or alternatively, the autonomous control module may be configured to cause the power take-off device to deliver power to the DC bus at a variable delivery power which varies through a range of non-zero delivery powers. For example, the variable delivery power may be an electrical power currently generated applied by the power take-off device, which may naturally vary depending on a braking force and inertia of the associated vehicle. Therefore, the delivery power may vary independently of the resource availability function.

Nevertheless, the autonomous control module determines the delivery power (i.e., the rate of electrical energy supply to the DC bus) in the absence of any specific demand or request for a particular delivery power. The resource demand value only indicates a variable demand for power, and does not indicate an amount of power demanded.

In other examples, a delivery power at which a power is delivered from an autonomous power source may be fixed or may only be a function of a resource availability at the respective power source (and any power delivery limit as discussed elsewhere herein). The resource demand value may only be used to determine whether to cause power delivery, and there may be no separate determination as to the delivery power itself based on the resource demand value.

**Figures 7a and 7b** show example of resource demand values, resource availability values and delivery powers for a first example mission, and can be considered together to illustrate the operating principle of the disclosure. In this example, a power network for a transport climate control system has power sources including a battery, an axle-mounted power take-off device ("eAxle"), a solar power source, a shore (utility) power source, and a TCCS-mounted prime mover and generator ("generator"), such as a diesel generator. Both Figures 7a and 7b show parameters varying over 49 points along a time axis (x axis), each point representing a 10 minute segment of a mission for the TCCS having a total mission time of 480 minutes (8 hours). The mission may correspond to a journey to transport refrigerated goods from an origin to a destination (such as a port to a supermarket).

**Figure 7a** shows resource availability functions (RAF) for the eAxle, diesel generator and shore power. The diesel generator RAF profile is relatively uniform, reflecting a predictable resource cost for power generation (diesel fuel). The RAF profile varies from a first segment at a constant value of 70 to a second segment at a constant value of 80. In this example, the autonomous control module for the diesel generator is configured to vary the RAF based on usage through the mission, and in particular to increase the RAF to prevent depletion of a fuel reserve (i.e., by promoting power delivery from other power sources).

The shore power RAF is constant, at a level reflecting an economic cost of power delivery from a shore power connection when available. In this example the RAF does not vary to indicate the presence or absence of a shore power connection (i.e. a live connection to shore (utility) power), and the shore power source simply does not deliver power when there is no shore power connection. In other examples, the autonomous control module may vary the RAF based on the presence or absence of a shore power connection.

The eAxle RAF (for the power take-off power source) has a variable profile reflecting different segments of the mission, and in particular the associated resource availability dependent on any regenerative braking that may be applied. Figure 7a also shows an example eAxle delivery power that is or would be delivered over the mission (i.e. if the autonomous control module selects to cause power delivery from the eAxle at the respective time). For illustrative purposes, both the RAF and the delivery power are shown on the same axis in a range from 0-100. The RAF may be a dimensionless quantity in any case, whereas in this example the delivery power is normalized to a maximum power delivery on a scale of 0-100 (for example, a maximum power delivery of the battery power source).

By way of example only, the eAxle profile RAF as shown may reflect the following operating conditions of the power-take off power source. In the example of Figure 7a the autonomous control module for the eAxle separately derives both a RAF which is comparable with the RDV (e.g, such that power is delivered when the RAF is less than the RDV), and a delivery power at which the power will be delivered. This enables the RAF of the eAxle to be compared and shown alongside with those of other autonomous power sources.

As shown in Figure 7a, in this example the RAF for the eAxle is either 30, 0, or 100. In this example, a RAF of 30 corresponds to a resource cost of powering a prime mover which provides the underlying mechanical power for the eAxle. In this example the eAxle is mounted to a non-driven axle (e.g., of the vehicle or a towed trailer) that is caused to rotate when the vehicle (and transport climate control system) moves. A RAF of 0 corresponds to the eAxle being operated to provide regenerative braking, such that any generated power is effectively a by-product of the instructed braking. A RAF of 100 corresponds to there being no capability for the eAxle to selectively generate power, for example because of the axle is not rotating.

The profile of the RAF for the eAxle varies between 30, 0 and 100 (in this example, in a repeating fashion, but this is merely an artefact of the example). As shown, the associated delivery power varies independently of the RAF for the eAxle, varying from 25, to 35, to 50 (as dimensionless or normalized quantity) when the eAxle provides power, to 0 when the RAF is 100 and the eAxle does not provide power. It will be appreciated that example numbers and profiles shown in Figure 7a are illustrative and may not represent continuous power delivery. For example, a value of a delivery power as shown may be an average over the associate time segment.

Figure 7a also shows a varying RDV profile over the course of the mission, again on a normalized scale of 0-100 (respectively normalised to the range of the RDV). The RDV is based on the actual delivery of power to the DC bus and the power demand of the load, which may not be directly intuited from Figure 7a. Nevertheless, in this example each autonomous control module is configured to cause power delivery (when available) from the respective power source when the RDV is equal to or greater than the respective RAF, and so Figure 7 may be interrogated to determined which power sources are delivering power throughout the mission.

**Figure 7b** shows an example illustrative profile of power delivery through the mission. Relative to Figure 7a, this additionally shows battery delivery and charging (below the x-axis), and solar power delivery which depends solely on the amount of solar power generated. A profile of power demand overlaid, and as can be seen the delivery powers sum to the power demand, or exceed it to also result in battery charging.

In this example, the primary control module is configured to vary the RDV based on the third and fourth modes of varying the RDV as discussed above. In particular, an algorithm defining the RDV is defined to increase the RDV when it is determined that a rolling average discharge power of the battery (in this example over a 30 minute segment) is higher than a threshold which is set based on the maximum SOC of the battery and the target mission time, with the amount of increase being in proportion to the amount that the discharge power exceeds the threshold. The algorithm is also defined to vary the RDV based on the total (net) power consumption of the battery, so as to increase the RDV when the battery is depleted by more than a target amount based on the mission time, and to reduce the RDV when the battery has a higher SOC than the target amount.

The function for the RDV is reflected in the profile of Figure 7b. In a first segment, the RDV progressively reduces as battery consumption is relatively low (at a moderate amount in mission segments 1-3, subsequently providing no power as solar power becomes available). In a second segment (approx. mission segments 10-15), the power demand increases and power availability from the power take-off power source reduces on average (considering no power delivery from the power take-off device at segments 11 and 12), requiring significant power delivery from the battery. A similar profile of reducing and increasing RDV continues from segments 15 to 30, with the increase in RDV promoting power delivery from the generator (mission segments 28-29), with some associated battery charging (mission segments 28-29). In a third segment (mission segments 33-37), shore power becomes available (e.g., the system is coupled to shore power/utility power), which provides an excess of power while the RDV is still relatively high, with a consequent excess of power used for charging. While shore power remains available through mission segments 35-37, by this time the RDV has reduced to below 22.5, which is the threshold for delivery of shore power, and so no further shore power is delivered. The power demand and RDV continue to fluctuate through further segments of the mission profile, promoting increases and decreases in power delivery from the respective power sources depending on the respective RAFs for the power sources. In this example, the battery power source starts the mission with 100% power and ends it with 49% power.

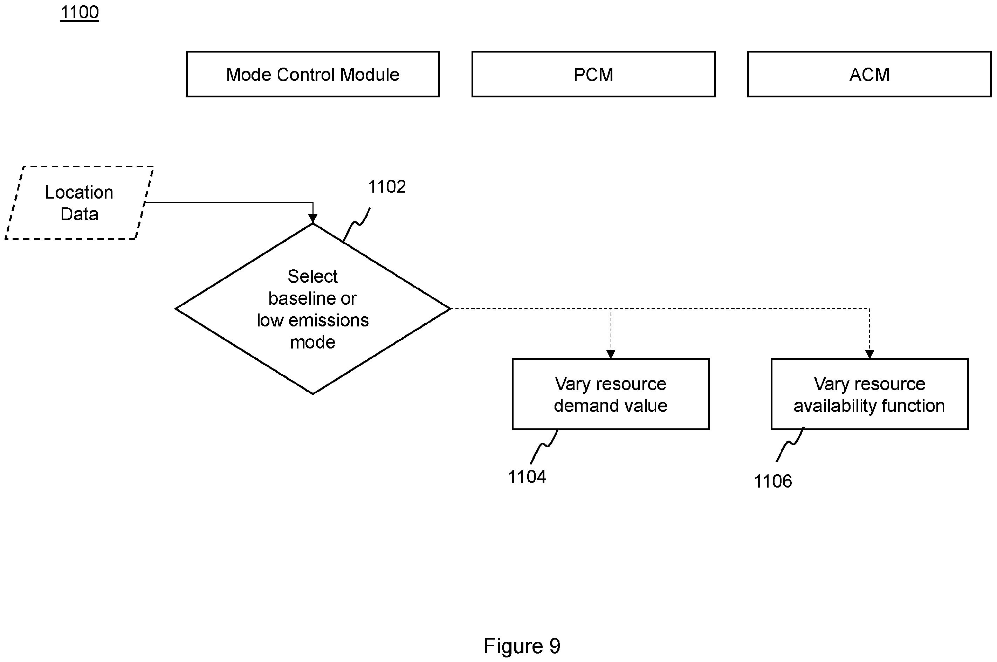

**Figures 7** **and** **8** show simplified examples of how the primary control module may vary the RDV during a TCCS mission based on parameters relating to the battery power source. **Figure 7** illustrates a target state of charge (SOC) for the battery power source which gradually depletes from 100% to 20% during the mission, together with a monitored (e.g. actual) SOC and an RDV which varies based on the difference between the monitored and target profiles. As shown in Figure 9, the RDV tends to increase as the monitored SOC falls below the target SOC, and reduces as the monitored SOC rises above the target SOC, thereby promoting an increase or reduction (respectively) of power delivery from one or more autonomous power sources.

**Figure 8** is a dual plot having upper and lower segments on different axes. The upper segment shows monitored SOC and RDV for a simplified example mission. The lower segment shows a rolling average of battery discharge power (delivery power) or charging power, shown relative to upper and lower bounds corresponding to threshold discharge powers and charging powers in an algorithm for the RDV. As shown in the plots, as the rolling discharge power increases to exceed the upper threshold, the RDV is caused to increase, thereby promoting power delivery from one or more autonomous power sources to prevent excessive discharge from the battery. In contrast, when the charging power moves beyond the respective threshold (i.e. falls below the lower bound threshold), the RDV is caused to reduce, thereby promoting use of the battery and a reduction in power delivery from autonomous power sources.

**Figure 9** is a flow diagram of a method 1100 of switching between a baseline mode of operation and a low emissions mode of operation. Referring briefly back to Figures 2 and 3, the example power networks 300, 300' each include a mode control module ("Mode CM") 322 which is configured to switch between the baseline mode of operation and a low emissions mode of operation. The mode control module may be provided together with (integrated with) the primary control module, or together with a respective autonomous control module. A mode control module may be provided separate from either the primary control module and any autonomous control module, and communicatively coupled with the primary control module and one or more autonomous control modules. In Figure 2, the mode control module is provided together with the primary control module and battery power source, whereas in Figure 3, the mode control module is provided together on the common controller 324.

Switching from the baseline operating mode to the low emissions operating mode may be conducted based on a command (e.g. as received from user input, or a transmitted instruction such as from a remote fleet controller), or based on location data monitored or received by the mode control module.

As shown in Figure 9, in block 1102 the mode control module selects between the baseline or low emissions mode, and optionally does so based on location data. The mode control module may include a location sensor such as a GPS sensor, and a database of predetermined locations corresponding to use of the low emissions mode. These locations may correspond to prescribed low emissions zones as defined by a local administrative authority.

In this example, the mode control module is communicatively coupled with the primary control module and an autonomous control module so that switching to the low emissions mode (from the baseline mode) causes the primary control module to vary the resource demand value (block 1104), and causes the autonomous control module to vary the resource availability function (block 1106). In other examples, only one of the primary control module and an autonomous control module may respond to the selection, and the mode control module may be communicatively coupled with or integrated with only that module.

For example, the primary control module may be configured to adapt an algorithm for determining the resource demand variable so that the resource demand value generally indicates a lower demand for power from the autonomous power sources in the low emissions mode than in the baseline mode (e.g. by making the resource demand value itself lower in the examples as described above). This may promote more use of the battery power source, with commensurately lower use of the one or more autonomous power sources during a respective phase of a mission, including autonomous power sources that consume fuel and generate emissions.

An autonomous control module for a fuel-consuming (emissions-generating) power source may be configured so that the resource availability function generally indicates a lower resource availability when in the low emissions mode than in the baseline mode (e.g. by making the resource availability function itself higher in the examples described above, when in the low emissions mode) thereby promoting power delivery from other power sources in preference to the respective power source. The resource availability function may therefore be adapted so that, within a power network having multiple power sources, the respective (fuel-consuming) autonomous source responds as if it has a lower availability of resources (e.g. a higher RAF) and correspondingly requiring a higher power demand (e.g. a higher RDV) than in the baseline mode to delivery power to the DC bus. This may result in power being delivered from alternative power sources, thereby inhibiting use of the respective power source.

## Claims

1. A power network for a transport climate control system, comprising:
a DC bus configured to provide power from a plurality of power sources to a load, including one or more autonomous power sources,
one or more autonomous control modules, each associated with a respective one of the autonomous power sources;
a primary control module configured to determine a resource demand value for the power network by monitoring power delivery to the load, wherein the resource demand value varies as a quantitative variable;
wherein each autonomous control module is configured to receive the resource demand value and determine whether to cause power delivery from the respective autonomous power source to the DC bus based on the resource demand value and a corresponding resource availability function associated with the respective power source.

2. The power network of claim 1, wherein the primary control module is configured to determine the resource demand value based on a monitored deficit or excess of power delivery to the DC bus, relative to a power demand of the load.

3. The power network of claim 1, wherein the plurality of power sources comprises a battery power source; and
wherein there is a deficit in power delivery to the DC bus when the battery power source discharges power to the DC bus; and
wherein there is an excess of power delivery to the DC bus when the battery power source is charged by power delivery from the DC bus.

4. The power network of claim 2 or 3, wherein the primary control module is configured to vary the resource demand value through a range of resource demand values based on the monitored deficit or excess of power delivery to the DC bus;
wherein the primary control module is configured to vary the resource demand value towards one end of the range to promote an increase of power delivery from the autonomous power sources to reduce a monitored deficit; and
wherein the primary control module is configured to vary the resource demand towards the opposing end of the range to promote a reduction of power delivery from the autonomous power sources to reduce a monitored excess.

5. The power network of any one of the preceding claims, wherein the primary control module is configured to vary the resource demand value based on one or more of:
a state of charge of the battery power source;
a discharge power supplied by the battery power source to the DC bus;
a charging power supplied to the battery power source from the DC bus;
a current or predicted power consumption of the load for a mission of the transport climate control system;
a comparison of a monitored power consumption of the load and a target power consumption of the load for the mission of the transport climate control system;
a current or predicted power consumption of the battery power source for a mission of the transport climate control system;
a comparison of a monitored power consumption of the battery power source and a target power consumption of the battery power source for the mission of the transport climate control system.

6. The power network of claim 5, wherein the primary control module is configured to vary the resource demand value by:
comparing the state of charge of the battery source with a target state of charge; and
varying the resource demand value to promote an increase in power delivery from the autonomous power sources when the state of charge of the battery is lower than the target state of charge; and
varying the resource demand value to promote a reduction in power delivery from the autonomous power sources when the state of charge of the battery is higherthan the target state of charge.

7. The power network of claim 5 or 6, wherein the primary control module is configured to vary the resource demand value by:
varying the resource demand value to promote an increase in power delivery from the autonomous power sources when the discharge power is determined to be higher than a target discharge power;
varying the resource demand value to promote a reduction in power delivery from the autonomous power sources when the charging power is determined to be higher than a target charging power.

8. The power network of any one of the preceding claims, wherein at least one of the autonomous power sources is configured so that, when controlled to deliver power to the DC bus by the respective autonomous control module, the power is delivered at a delivery power determined based on power generation at the respective power source and independent of a power demand of the load.

9. The power network of any one of the preceding claims, wherein for at least one of the autonomous power sources, the respective resource availability function corresponds to a resource cost for power delivery from the power source to the DC bus.

10. The power network of any one of the preceding claims, wherein:
one of the autonomous power sources is configured to consume a fuel and the respective resource availability function corresponds to a resource cost for the fuel; and/or
one of the autonomous power sources is a power take-off device configured to convert mechanical power for movement of a vehicle associated with the transport climate control system to electrical power for delivery to the DC bus, wherein the respective resource availability function corresponds to a resource cost for the mechanical power; and/or
one of the autonomous power sources is configured to selectively transfer power from a utility power source to the DC bus, and the respective resource availability function corresponds to a resource cost and/or connection status for the transferred power.

11. The power network of any one of the preceding claims, wherein one of the autonomous power sources is a power take-off device configured to convert mechanical power for movement of a vehicle associated with the transport climate control system, to electrical power for delivery to the DC bus;
wherein the respective autonomous control module is configured to cause the power take-off device to deliver power to the DC bus at a variable delivery power which varies through a range of non-zero delivery powers.

12. The power network of any one of the preceding claims, wherein at least one of the autonomous power sources is a fuel-consuming power source configured to consume a fuel;
wherein the power network comprises a mode control module configured to select between operation in a baseline mode and a low emissions mode; wherein the mode control module is configured so that moving from the baseline mode to the low emissions mode causes:
an autonomous control module associated with a fuel-consuming power source to vary the respective resource availability function to promote a reduction of power delivery from the fuel-consuming power source; and/or
the primary control module to vary the resource demand value to promote a reduction of power delivery from the autonomous power sources.

13. The power network of claim 12, wherein the power network comprises a location determination module configured to monitor a location of the transport climate control system; and
wherein the mode control module is configured to switch between operation in the baseline mode and the low emissions mode based on the monitored location of the transport climate control system.

14. The power network of any one of the preceding claims, wherein the plurality of power sources comprises a solar power source configured to deliver electrical power from a solar array, and a solar control module configured to permit power delivery from the solar power source irrespective of the resource demand value.

15. The power network of any one of the preceding claims, wherein for at least one of the autonomous power sources, the respective autonomous control module is removable from the power network independently of the primary control module.

16. The power network of any one of the preceding claims, wherein for at least one of the autonomous power sources, the respective autonomous control module is configured to control power delivery from the autonomous power source only based on:
(i) one or more parameters that exclusively relate to the autonomous power source, including the resource availability function;
(ii) the resource demand value received from the primary control module; and
(iii) any power delivery limit for power delivery to the DC bus.

17. The power network of any one of the preceding claims, wherein the resource demand value is not a direct function indicative of an amount of power, and wherein each of the autonomous control modules is configured so that:
a determination to cause power delivery is based on the resource demand value and the respective resource availability function; and
a delivery power at which the power is to be delivered is determined independently of the resource demand value.
